# EUROPÄISCHE PATENTANMELDUNG

(11) **EP 1 898 213 A1**
(43) Veröffentlichungstag der Anmeldung: **12.03.2008**
(21) Anmeldenummer: 06090163.4
(22) Anmeldetag: 09.09.2006
(51) Int. Cl.: G01N 29/34, G01N 29/22, G01N 25/72, G01N 21/70, B06B 3/00

(54) **Verfahren zur Reduzierung der Ultraschallleistung bei der Prüfung eines Bauteils, insbesondere eines Massivbauteils, mittels ultraschallangeregter Thermografie**

(71) Anmelder: INPRO Innovationsgesellschaft für fortgeschrittene Produktionssysteme in der Fahrzeugindustrie mbH, 10587 Berlin (DE)
(72) Erfinder: Bethke, Ulrich, 14052 Berlin (DE); Plath, Sascha c/o INPRO Innovationsges. mbH, 10587 Berlin (DE)
(74) Vertreter: Hoffmann, Klaus-Dieter

(57) **Zusammenfassung**

Die Erfindung bezieht sich auf ein Verfahren zur Reduzierung der Ultraschallleistung bei der Prüfung eines Bauteils, insbesondere eines massiven, räumlich begrenzten Bauteils auf Oberflächenfehler und/oder innere Fehler mittels Ultraschallpulsthermografie, bei dem das Bauteil von einem Ultraschallimpuls (Ultraschallburst) eines an das Bauteil angekoppelten Ultraschallsenders zum Schwingen angeregt und entstehende Verzerrungen des Oberflächentemperaturfeldes des Bauteils mittels einer Wärmebildkamera erfaßt und mittels eines Rechners ausgewertet werden. Um die Betriebslebensdauer des eingesetzten Ultraschallgebers beträchtlich zu erhöhen und bei Erhalt der Fehlerzeichnungsqualität die anzuwendende Ultraschallleistung zugleich beträchtlich zu reduzieren, wird erfindungsgemäß zunächst die Eigenfrequenz (Resonanzfrequenz) des zu prüfenden Bauteils ermittelt und dann das Bauteil mit seiner Eigenfrequenz (Resonanzfrequenz) von dem Ultraschallsender angeregt wird.

## Beschreibung

Die Erfindung betrifft ein Verfahren zur Reduzierung der Ultraschallleistung bei der Prüfung eines Bauteils, insbesondere eines Massivbauteils, auf Oberflächenfehler und/oder innere Fehler mittels ultraschallangeregter Thermografie, bei dem das Bauteil durch einen Impuls eines Ultraschallsenders schwingungsmäßig angeregt und entstehende Verzerrungen des Oberflächentemperaturfeldes des Bauteils mittels einer Wärmebildkamera erfaßt und anschließend rechnermäßig ausgewertet werden.

Für die thermografische Prüfung von Bauteilen ist eine charakteristische Wärmeabstrahlung des Prüflings erforderlich. Da das zu prüfende Bauteil im Ausgangszustand normalerweise Umgebungstemperatur und somit eine homogene Wärmeverteilung aufweist, ist eine externe Einbringung von Energie notwendig, um ein entsprechendes Wärmebild zu erhalten. Dies kann gemäß der DE 100 59 854 A1 mittels Pulsthermografie z.B. durch Ultraschalleinkopplung erfolgen. Wird Schall in ein fehlerbehaftetes Bauteil eingeleitet, so wird dieser bevorzugt an den schadhaften Stellen in Eigenwärme des Bauteils durch innere Reibung umgewandelt. Die erzeugte Wärme wird mittels einer Thermografiekamera erfaßt und als Fehlernachweis interpretiert.

Problematisch ist bei der Ultraschallpulsthermografie, daß das zu untersuchende Bauteil mit einem kurzen Ultraschallimpuls hoher Pulsleistung (Ultraschallburst) des an das Bauteil außen ankoppelnden Ultraschallsenders aufgeheizt wird, und zwar typischerweise mit einer Frequenz von 20 kHz bis 100 kHz bei einer Impulsdauer von einigen Hundertstelsekunden bis zu wenigen Sekunden. Hierbei besteht die Gefahr sowohl einer Schädigung des zu untersuchenden Bauteils als auch der Verringerung der Lebensdauer des Ultraschallsenders infolge der rückgekoppelten Schallleistung.

Der Erfindung liegt daher die Aufgabe zugrunde,ein Verfahren der eingangs erwähnten Art zur Verfügung zu stellen, mit dem die aufgezeigten Nachteile vermieden und gleichzeitig Fehlerzeichnungen zumindest bisheriger Qualität erzielt werden können,

Erfindungsgemäß zeichnet sich das Verfahren dadurch aus, daß zunächst die Eigenfrequenz (Resonanzfrequenz) des zu prüfenden Bauteils ermittelt und dann das Bauteil mit seiner Eigenfrequenz (Resonanzfrequenz) von dem Ultraschallsender angeregt wird.

Die Eigenfrequenz (Resonanzfrequenz) des zu prüfenden Bauteils kann mittels Simulation oder versuchsmäßig ermittelt werden. Die Resonanzanregung des Bauteils kann zusätzlich im an sich bekannten Lock-in-Verfahren (fehlerselektives Anregungsverfahren) durchgeführt werden.

Das erfindungsgemäße Verfahren ermöglicht es, Fehlerzeichnungen bei etwa 10% der bislang in der (rabiaten) Impulsanregung verwendeten Ultraschallleistung sichtbar werden zu lassen, wobei zugleich mindestens eine 3 - 4 fache Standzeitverlängerung des Ultraschallsenders erreichbar ist.

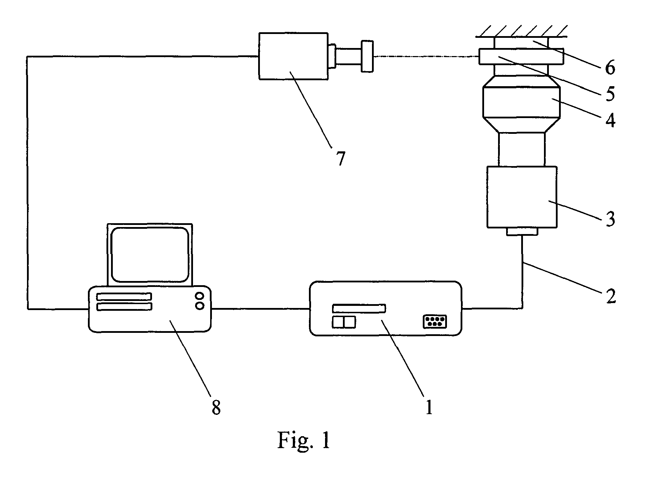

Aus der einzigen Figur der Zeichnung geht beispielhaft ein Ultraschallgebersystem auf Piezokeramikbasis hervor, wie es beim erfindungsgemäßen Verfahren zum Einsatz kommen kann. Von einem Wechselspannungsgenerator 1 wird über ein HF-Kabel 2 ein Piezokeramikstapel in einem Konverter 3 mit einer hochfrequenten Wechselspannung (wenige kHz bis in den MHz-Bereich) beaufschlagt. Durch den umgekehrten Piezoeffekt wird diese Wechselspannung in mechanische Schwingung umgesetzt, die durch die beiden Größen Amplitude und Frequenz charakterisiert ist. Über die Software des Wechselspannungsgenarators 1 kann die zu erzeugende Schwingung sowohl in ihrer Frequenz als auch bezüglich ihrer Amplitude moduliert werden.

Auf dem Konverter 3 sitzt als passives Bauteil ein sogenannter Booster 4, der zusammen mit dem Konverter 3 den Ultraschallgeber bildet und für eine Änderung der Schwingungsamplitude sowie der aufbringbaren Kraft an der Auflagefläche des Boosters sorgt

Das zu prüfende Bauteil 5 wird nach Einspannung zwischen Booster 4 und einem Gegenlager 6 mit Ultraschall beaufschlagt, wobei die Schwingung des aus Konverter 3 und Booster 4 gebildeten Ultraschallgebers auf das zu prüfende Bauteil 5 übertragen wird. Durch diese Schwingungen reiben etwaig vorhandene Rissflanken in dem zu prüfenden Bauteil 5 aneinander und erzeugen Wärme. Die hierbei entstehenden Verzerrungen des Oberflächentemperaturfeldes des zu prüfenden Bauteils 4 werden mittels einer Wärmebildkamera 7 erfaßt, und von einem mit dieser verbundenen Steuerungs-PC 8 ausgewertet, der wiederum zur Einstellung der Frequenz und des Amplitudenverlaufes mit dem Wechselspannungsgenerator 1 gekoppelt ist.

Mit einem derartigen Aufbau kann zunächst eine Impulsanregung des zu prüfenden Bauteils 5 mit einer Frequenz von 20 kHz über ein Zeitraum von etwa 0,3 Sekunden bei einer Ultraschallleitung von etwa 2 kW vorgenommen werden, wobei eine gute Fehlerdetektierbarkeit zu erzielen ist. Die Impulsanregung mit einem derart starken Ultraschallimpuls birgt jedoch die Gefahr einer Schädigung des Piezokeramikstapels im Konverter 3 des Schwingungsgebers nach verhältnismäßig kurzer Zeit in sich. Grund dafür ist die starke Rückkopplung des z.B. aus Stahl bestehenden zu prüfenden Bauteils 5, da es während der Anregung zu nichtlinearem Kontaktverhalten zwischen dem zu prüfenden Bauteil 5 und dem Booster 4 des Schwingungsgebers kommen kann. Das Bauteil 5 kann vom Booster 4 abheben und unkontrolliert wieder auf dessen Oberfläche aufschlagen. Einerseits scheint darin der Grund für die gute Fehlerzeichnungsqualität zu liegen, andererseits wird die Piezokeramik durch derartige Schläge frühzeitig zerstört.

Erfindungsgemäß werden mit dem dargestellten Aufbau der Impulsanregung Eigenfrequenzen des Schwingungssystems, bestehend aus einem zu prüfenden Bauteil 5, dem Ultraschallgeber 3,4 und der Einspannkonstruktion 6, versuchsmäßig durch Variieren der Frequenz der Impulsanregung ermittelt, und dann wird die Ultraschallanregung auf die ermittelte Eigenfrequenz umgestellt, wobei qualitätsgerechte Fehlerzeichnungen bei etwa 10 % der zuvor bei der Impulsanregung verwendeten Ultraschallleistung sichtbar werden.

Zur besseren Detektion der Fehlerzeichnungen kann die Resonanzanregung zusätzlich im herkömmlichen Lock-in-Verfahren durchgeführt werden, wobei die Amplitude der Anregungsfrequenz sinusförmig moduliert wird, um zu erreichen, daß sich die Fehlerbereiche in der Stärke ihrer Wärmeabstrahlung sinusförmig ändern. Hierdurch wird das Auffinden von Fehlerbereichen deutlich vereinfacht, da andere, nicht in dieser sinusförmigen Art Wärme abstrahlenden Bereiche in den ausgewerteten Bildern nicht sichtbar sind.

## Patentansprüche

1. Verfahren zur Reduzierung der Ultraschallleistung bei der Prüfung eines Bauteils, insbesondere eines Massivbauteils auf Oberflächenfehler und/oder innere Fehler mittels Ultraschallpulsthermografie, bei dem das Bauteil von einem Ultraschallimpuls (Ultraschallburst) eines an das Bauteil angekoppelten Ultraschallsenders zum Schwingen angeregt und entstehende Verzerrungen des Oberflächentemperaturfeldes des Bauteils mittels einer Wärmebildkamera erfaßt und mittels eines Rechners ausgewertet werden,
**dadurch gekennzeichnet, daß** zunächst die Eigenfrequenz (Resonanzfrequenz) des zu prüfenden Bauteils ermittelt und dann das Bauteil mit seiner Eigenfrequenz (Resonanzfrequenz) von dem Ultraschallsender angeregt wird.

2. Verfahren nach Anspruch 1, **dadurch gekennzeichnet, daß** die Eigenfrequenz (Resonanzfrequenz) des zu prüfenden Bauteils durch Simulation ermittelt wird.

3. Verfahren nach Anspruch 1, **dadurch gekennzeichnet, daß** die Eigenfrequenz (Resonanzfrequenz) des zu prüfenden Bauteils versuchsmäßig ermittelt wird.

4. Verfahren nach einem der Ansprüche 1 bis 3, **dadurch gekennzeichnet, daß** die Resonanzanregung des Bauteils zusätzlich im an sich bekannten Lock-in-Verfahren durchgeführt wird.
